(19) Europäisches Patentamt / European Patent Office / Office européen des brevets

(11) **EP 4 134 386 B1**

(12) **EUROPÄISCHE PATENTSCHRIFT**

(45) Veröffentlichungstag und Bekanntmachung des Hinweises auf die Patenterteilung:
**08.11.2023  Patentblatt 2023/45**

(21) Anmeldenummer: **21191200.1**

(22) Anmeldetag: **13.08.2021**

(51) Internationale Patentklassifikation (IPC):
*C08G 18/70* (2006.01)   *C08G 18/12* (2006.01)
*C08G 18/75* (2006.01)   *C08G 18/77* (2006.01)
*C08G 18/42* (2006.01)   *C08G 18/66* (2006.01)
*C08G 18/08* (2006.01)   *C08G 18/78* (2006.01)

(52) Gemeinsame Patentklassifikation (CPC):
(C-Sets verfügbar)
**C08G 18/706; C08G 18/0828; C08G 18/10;
C08G 18/246; C08G 18/288; C08G 18/3206;
C08G 18/4238; C08G 18/6637; C08G 18/755;
C08G 18/7837; C08G 18/8083**   (Forts.)

(54) **ADDUKTZUSAMMENSETZUNGEN AUS DIISOCYANATEN UND HYDROXY- ODER AMINOFUNKTIONALISIERTEN ALKYLSULFONSÄUREN UND/ODER ALKYLSULFONSÄUREDERIVATEN**

ADDUCT COMPOSITIONS MADE OF DIISOCYANATES AND HYDROXY- OR AMINO-FUNCTIONALIZED ALKYLSULFONIC ACIDS AND/OR ALKYLSULFONIC ACID DERIVATIVES

COMPOSITIONS D'ADDUIT COMPOSÉE DE DIISOCYANATES ET D'ACIDES ALKYLSULPHONIQUES HYDROXY- OU AMINO-FONCTIONNALISÉS ET/OU DE DÉRIVÉS D'ACIDES ALKYLSULPHONIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.02.2023   Patentblatt 2023/07**

(73) Patentinhaber: **Evonik Operations GmbH**
**45128 Essen (DE)**

(72) Erfinder:
• **SPYROU, Emmanouil**
  **46514 Schermbeck (DE)**
• **LOESCH, Holger**
  **44627 Herne (DE)**
• **DIESVELD, Andrea**
  **48712 Gescher (DE)**
• **KREISCHER, Susanne**
  **45701 Herten (DE)**
• **ELMER, Lisa-Maria**
  **48145 Münster (DE)**
• **HELLKUHL, Lars**
  **48712 Gescher (DE)**
• **BRÜCKNER, Iris**
  **46284 Dorsten (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**WO-A1-00/39183       WO-A1-2014/067431
DE-A1-102005 057 683**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08G 18/10, C08G 18/3228**

**Beschreibung**

Die vorliegende Erfindung betrifft Adduktzusammensetzungen aus Diisocyanaten und hydroxy- oder aminofunktionalisierten Alkylsulfonsäure(derivate)n, Verfahren zu ihrer Herstellung und ihre Verwendung in Polyurethandispersionen, als selbst dispergierende Polyurethanhärter und als Hydrophilierungsmittel.

Wässrige Polyurethandispersionen haben in den letzten Jahrzehnten auf dem Sektor von Beschichtungen, Klebstoffen, Dichtstoffen und Kunststoffen immer mehr an Bedeutung gewonnen. Die Gründe dafür sind vielfältig. Vor allem einfache Anwendbarkeit, gute Performance, geringe bis gar keine Toxizität und natürlich der Verzicht auf organische Lösemittel sind von Vorteil.

Wässrige Polyurethandispersionen basieren üblicherweise auf mindestens einer Isocyanatkomponente, mindestens einer Harzkomponente und mindestens einem Hydrophilierungsmittel. Die einzelnen Komponenten werden dabei miteinander umgesetzt und dann in Wasser eingebracht.

Da das durch Umsetzung von Isocyanatkomponente und Harzkomponente gebildete Urethan allein nicht in Wasser eingebracht werden kann, werden Emulgatoren benötigt. Bevorzugt werden dabei reaktive Emulgatoren eingesetzt, die mit Isocyanatkomponente, Harzkomponente und/oder dem resultierenden Polyurethan reagieren. Diese reaktiven Emulgatoren werden auch als Hydrophilierungsmittel bezeichnet. Zu den bekanntesten Hydrophilierungsmitteln zählt Dimethylolpropionsäure (DMPS). Diese wird nach dem Einbau mit Aminen oder Alkalisalzen neutralisiert. Nachteilig ist jedoch, dass große Mengen Dimethylolpropionsäure benötigt werden.

Ebenfalls eingesetzt werden Sulfonsäuren, z. B. in Form von mit Alkalisalz neutralisierten Aminoderivaten (wie z. B. das unter der Handelsbezeichnung VESTAMIN A95 erhältliche Natrium-2-[(2-aminoethyl)amino]ethansulfonat der Evonik Industries AG). Solche Sulfonsäurederivate sind vorteilhaft, da lediglich geringe Mengen notwendig sind und sie somit sehr effizient sind. Nachteilig ist jedoch, dass solche Salze aufgrund ihrer großen Hydrophilie lediglich in Wasser gelöst appliziert werden. Aufgrund dessen muss das zu hydrophilierende Bindemittel zunächst nachteilig in Wasser emulgiert werden. Als Alternative können auch Hilfslösemittel verwendet werden - dies steht jedoch dem Einsatzzweck wässriger Dispersionen entgegen, da der Einsatz von Lösemitteln gerade vermieden werden soll.

CN 106366291 A offenbart selbst-dispergierende Polyurethanhärter, die über die Umsetzung von 70 - 90 Gew.-% Isocyanat mit 1 - 5 Gew.-% Sulfonsäure oder Sulfonsäurederivat in Gegenwart von 1 - 5 Gew.-% Hilfsstoffen und ggf. in Anwesenheit eines Ether-Ester-Lösemittelns hergestellt werden können. Der maximale Gesamtanteil Sulfonsäure oder Sulfonsäurederivat im resultierenden Härter liegt somit bei ungefähr 7 Gew.-%. Nachteilig an dem in CN 106366291 A beschriebenen Härter ist jedoch, dass zwar der Härter selbst (die Isocyanatkomponente), nicht aber das durch Umsetzung von Isocyanatkomponente mit Harzkomponente resultierende Polyurethan ohne Zugabe weiterer Emulgatoren in Wasser dispergiert werden kann.

EP 0 703 255 A1 offenbart für die Herstellung von Dispersionen von Polyurethanen einsetzbare wasseremulgierende Polyisocyanatgemische, die Polyisocyanate und Umsetzungsprodukte dieser Polyisocyanate mit Verbindungen mit mindestens einer mit Isocyanat reaktiven Gruppe und mindestens einer schwefelsauren Gruppe umfassen. Bevorzugte Polyisocyanate sind u.a. cycloaliphatische Isocyanate, insbesondere Isophorondiisocyanat und darauf basierende Isocyanurate und Biurete. Entsprechende Allophanate mit einfachen mehrwertigen Alkoholen wie Trimethylolpropan, Glycerin, 1,2-Dihydroxypropan und deren Gemischen können jedoch auch eingesetzt werden. Bevorzugte Verbindungen mit schwefelsauren Gruppen sind Hydroxy- oder Aminosulfonsäuren oder Halbester der Schwefelsäure mit OH- oder NH-Gruppe. Weiter bevorzugt ist 2-Hydroxyethansulfonsäure und 2-Hydroxypropansulfonsäure. Die Verbindungen mit schwefelsaurer Gruppe können in Säure- oder Salzform eingesetzt werden. Der Nachteil der dort offenbarten Polyisocyanatgemische enthaltend sulfoniertes Isophorondiisocyanat ist, dass dieses aufgrund der Reaktion mindestens einer der beiden Isocyanatgruppen des Isophorondiisocyanat nicht mehr als Härter, sondern nur noch als Hydrophilierungsmittel fungieren kann. Der Nachteil der ebenfalls offenbarten Polyisocyanatgemische enthaltend sulfoniertes Allophanat auf Basis eines Diisocyanats mit einfachen mehrwertigen Alkoholen ist, dass diese zum einen aufwändig herzustellen sind (zuerst wird ein Allophanat gebildet und dieses dann mit Sulfonsäure umgesetzt) und weiterhin diese Verbindungen auch nicht ausreichend gut dispergierend wirken, da sie nicht ausreichend hoch sulfoniert sind. Darüber hinaus ist nachteilig, dass die mit dem Alkohol reagierte NCO-Gruppe nicht zur Reaktion zur Verfügung steht.

Es ist somit die Aufgabe der vorliegenden Erfindung, die Nachteile des Standes der Technik zu vermeiden. Insbesondere ist es Aufgabe der vorliegenden Erfindung, selbst dispergierende Polyurethanhärter und Hydrophilierungsmittel zu entwickeln, die einfacher synthetisiert werden können. Diese sollen weiterhin besser dispergierend wirken und insbesondere nicht nur sich selbst, sondern auch die mit ihnen herstellbaren Polyurethane in wässriger Lösung dispergieren, so dass keine weiteren Emulgatoren oder Lösemittel erforderlich sind. Weiterhin sollen sie eine hohe Verarbeitungsviskosität aufweisen.

Die vorliegenden Aufgaben werden gelöst durch die erfindungsgemäße Adduktzusammensetzung

- mindestens eines Diisocyanats A) und

- mindestens eines hydroxy- oder aminofunktionalisierten Alkylsulfonsäure(derivat)s B), wobei in der Adduktzusammensetzung mindestens 15 % der vom Alkylsulfonsäure(derivat) B) abgeleiteten Alkylsulfonsäure(derivat)reste gebunden an eine Allophanat- und/oder Biuretgruppe und/oder an eine von einer Allophanat- und/oder Biuretgruppe durch Addition von Diisocyanat A) abgeleiteten Gruppe vorliegen.

Bei der erfindungsgemäßen Adduktzusammensetzung handelt es sich um ein Umsetzungsprodukt bzw. ein Gemisch an Umsetzungsprodukten aus der Reaktion mindestens eines Diisocyanats A) und mindestens eines hydroxy- oder aminofunktionalisierten Alkylsulfonsäure(derivat)s B).

Bei der Umsetzung von Diisocyanat A) mit hydroxy- oder aminofunktionalisierten Alkylsulfonsäure(derivat) B) wird bei einer stöchiometrischen Umsetzung im Falle des Einsatzes eines hydroxyfunktionalisierten Alkylsulfonsäure(derivat)s zunächst durch Reaktion der Hydroxygruppe mit einer Isocyanatgruppe ein urethangruppenhaltiges Addukt gebildet. Entsprechend wird im Falle des Einsatzes eines aminofunktionalisierten Alkylsulfonsäure(derivat)s zunächst durch Reaktion der Aminogruppe mit einer Isocyanatgruppe ein harnstoffgruppenhaltiges Addukt gebildet.

Die erfindungsgemäßen Adduktzusammensetzungen weisen jedoch nicht nur die Urethane bzw. Harnstoffe als Produkte der stöchiometrischen Umsetzung auf: Die resultierenden Urethan- und/oder Harnstoffgruppen der Addukte stöchiometrischer Umsetzung wurden zumindest partiell mit weiterem Diisocyanat A) zu Allophanatgruppen (im Falle des Einsatzes von hydroxyfunktionalisierten Alkylsulfonsäurederivaten und somit zwischenzeitlicher Bildung von urethangruppenhaltigen Verbindungen) und/oder Biuretgruppen (im Falle des Einsatzes von aminofunktionalisierten Alkylsulfonsäurederivaten und somit zwischenzeitlicher Bildung von harnstoffgruppenhaltigen Verbindungen) umgesetzt. Weiterhin können die erhaltenen Produkte mit Allophanatgruppen bzw. Biuretgruppen durch weitere Umsetzung mit Diisocyanat A) auch von Allophanat- und/oder Biuretgruppen durch Addition eines oder mehrerer Diisocyanate A) abgeleitete Gruppen bilden. Diese entstehen jedoch erfahrungsgemäß erst dann, wenn sehr hohe Gehalte (mehr als 25 % zum Allophanat bzw. Biuret umgesetztes Urethan bzw. Harnstoff, bezogen auf die Gesamtmenge an vorhandenem und weiter reagierten Urethan bzw. Harnstoff) an Addukten mit Allophanat- und/oder Biuretgruppe entstanden sind.

Erfindungsgemäß liegen mindestens 15 % der Alkylsulfonsäure(derivat)reste der gebildeten Adduktzusammensetzung gebunden an eine Allophanat- und/oder Biuretgruppe oder eine von einer Allophanat- und/oder Biuretgruppe durch Addition eines Diisocyanats A) abgeleiteten Gruppe vor. Bei dem angegebenen erfindungsgemäßen Wert von mindestens 15 % handelt es sich somit um den Stoffmengenanteil, den die vom Alkylsulfonsäure(derivat) B) abgeleiteten Alkylsulfonsäure-(derivat)reste, die gebunden an eine Allophanat- und/oder Biuretgruppe und/oder an eine von einer Allophanat- und/oder Biuretgruppe durch Addition eines Diisocyanats A) abgeleiteten Gruppe vorliegen, bezogen auf die eingesetzte Stoffmenge Alkylsulfonsäure(derivat) B) mindestens aufweisen. Bevorzugt liegen mindestens 20 % der Alkylsulfonsäure(derivat)reste des gebildeten Adduktzusammensetzung gebunden an eine Allophanat- und/oder Biuretgruppe oder eine von einer Allophanat- und/oder Biuretgruppe durch Addition eines Diisocyanats A) abgeleiteten Gruppe vor.

Die Bestimmung des Gehaltes der an eine Allophanat- und/oder Biuretgruppe und/oder an eine von einer Allophanat- und/oder Biuretgruppe durch Addition eines Diisocyanats A) abgeleiteten Gruppe gebundenen Alkylsulfonsäure(derivat)reste kann über die NCO-Zahl der Adduktzusammensetzung erfolgen. Dazu muss der Fachmann den Anteil der nicht-stöchiometrischen Umsetzung bestimmen. Die Bestimmung des Anteils über Allophanatgruppen angebundener Alkylsulfonsäurederivate wird nach vollständiger Reaktion über folgende Formel abgeleitet:

$$((\text{Theorie-NCO} - \text{Praxis-NCO}) / \text{Theorie-NCO}) \cdot 100\ \%$$

Der Wert variiert zwischen 0 % (Praxis-NCO = Theorie NCO) und 100 % (Praxis-NCO = 0).

Der praktische NCO-Gehalt wird gemäß DIN EN ISO 11909 (2007) bestimmt.

Dem Fachmann ist bekannt, unter welchen Reaktionsbedingungen er die Reaktion durchführen muss, um zu entsprechenden Adduktzusammensetzungen zu gelangen.

Diisocyanate A) sind dem Fachmann bekannt. Bevorzugt ist das mindestens eine Diisocyanat ausgewählt aus der Gruppe bestehend aus Cyclohexandiisocyanat, Methylcyclohexandiisocyanat, Ethylcyclohexandiisocyanat, Propylcyclohexandiisocyanat, Methyl-diethyl-cyclohexandiisocyanat, Propandiisocyanaten (insbesondere n-Propandiisocyanat), Butandiisocyanaten (insbesondere n-Butandiisocyanat), Pentandiisocyanaten (insbesondere n-Pentandiisocyanat), Hexandiisocyanaten (insbesondere Hexamethylendiisocyanat (HDI) und 1,5-Diisocyanato-2-methylpentan (MPDI)), Heptandiisocyanaten (insbesondere n-Heptandiisocyanat), Octandiisocyanaten (insbesondere n-Octandiisocyanat), Nonandiisocyanaten (insbesondere 1,6-Diisocyanato-2,4,4-trimethylhexan und 1,6-Diisocyanato-2,2,4-trimethylhexan (TMDI)), Dekandiisocyanaten (insbesondere n-Dekandiisocyanat), Undekandiisocyanaten (insbesondere n-Undekandiisocyanat), Dodekandiisocyanaten (insbesondere n-Dodekandiisocyanat), Isophorondiisocyanat (IPDI), Isocyanatomethylmethylcyclohexylisocyanaten, 2,5(2,6)-Bis(isocyanatomethyl)bicyclo[2.2.1]heptan (NBDI), 1,3-Bis(isocyanatomethyl)cyclohexan (1,3-$H_6$-XDI), 1,4-Bis(isocyanatomethyl)cyclohexan (1,4-Hs-XDI), Tetramethylxylyendiisocyanat (TMXDI), Lysindiisocyanatalkylester und Dicyclohexylmethylendiisocyanat (H12MDI).

Weiter bevorzugt wird das mindestens eine Diisocyanat A) ausgewählt aus der Gruppe bestehend aus Isophorondiisocyanat, Dicyclohexylmethylendiisocyanat, Hexamethylendiisocyanat und Trimethylhexamethylendiisocyanat (insbesondere 2,4,4-Trimethylhexamethylendiisocyanat, 2,2,4-Trimethylhexamethylendiisocyanat, sowie ein Gemisch dieser beiden Isomere).

Die Adduktzusammensetzung ist das Umsetzungsprodukt mindestens eines Diisocyanats A) (und mindestens eines hydroxy- oder aminofunktionalisierten Alkylsulfonsäure(derivat)s B)), d.h. es ist das Umsetzungsprodukt eines Diisocyanats, zweier Diisocyanate oder von mehr als zwei Diisocyanaten (mit mindestens einem hydroxy- oder aminofunktionalisierten Alkylsulfonsäure(derivat) B)). Besonders gute Ergebnisse werden erzielt, wenn die Adduktzusammensetzung ausschließlich auf einem Diisocyanat basiert. Somit ist sie bevorzugt die Adduktzusammensetzung eines Diisocyanats. Entsprechend leitet sich die Adduktzusammensetzung bevorzugt strukturell von diesem einen bevorzugten Diisocyanat ab.

Ganz besonders bevorzugt ist das Diisocyanat A) Isophorondiisocyanat.

Die Adduktzusammensetzung basiert weiterhin auf mindestens einem hydroxy- oder aminofunktionalisierten Alkylsulfonsäure(derivat) B), d.h. auf mindestens einer hydroxy- oder aminofunktionellen Alkylsulfonsäure und/oder mindestens einem hydroxy- oder aminofunktionalisierten Alkylsulfonsäurederivat. Der Begriff "hydroxy- oder aminofunktionalisiertes Alkylsulfonsäure(derivat)" B) bezeichnet dabei sowohl Hydroxyalkylsulfonsäuren und Aminoalkylsulfonsäuren als auch Hydroxyalkylsulfonsäuresalze und Aminoalkylsulfonsäuresalze.

Entsprechend basiert die erfindungsgemäße Adduktzusammensetzung auf i) mindestens einer Hydroxyalkylsulfonsäure, ii) mindestens einer Aminoalkylsulfonsäure, iii) mindestens einem Hydroxyalkylsulfonsäuresalz, iv) mindestens einem Aminoalkylsulfonsäuresalz oder v) Mischungen von mindestens zwei der Verbindungen ausgewählt aus i) bis iv). Bevorzugt basiert die Adduktzusammensetzung auf mindestens einer Hydroxyalkylsulfonsäure und/oder mindestens einem Hydroxyalkylsulfonsäuresalz. Besonders bevorzugt basiert die Adduktzusammensetzung auf mindestens einem Hydroxyalkylsulfonsäuresalz.

Bevorzugt wird das mindestens eine hydroxy- oder aminofunktionalisierte Alkylsulfonsäure(derivat) B) ausgewählt aus der Gruppe bestehend aus Hydroxyethylsulfonsäure, Hydroxypropylsulfonsäure, Hydroxybutylsulfonsäure, Aminoethylsulfonsäure, Aminopropylsulfonsäure, Aminobutylsulfonsäure und 2-[(2-Aminoethyl)aminoethan]sulfonsäure und den entsprechenden Lithium-, Natrium-, Kalium- und Cäsiumsalzen dieser Säuren. Noch weiter bevorzugt wird das hydroxy- oder aminofunktionalisierte Alkylsulfonsäure(derivat) B) ausgewählt aus der Gruppe der entsprechenden Lithium-, Natrium-, Kalium- und Cäsiumsalze der genannten Säuren.

Die Adduktzusammensetzung ist die Adduktzusammensetzung mindestens eines hydroxy- oder aminofunktionalisierten Alkylsulfonsäure(derivats) B), entsprechend der Adduktzusammensetzung mindestens einer hydroxy- oder aminofunktionalisierten Alkylsulfonsäure oder mindestens eines entsprechenden Alkylsulfonsäurederivats. Eine entsprechende Adduktzusammensetzung ist somit die von einer/einem hydroxy- oder aminofunktionalisierten Alkylsulfonsäure(derivat), von zwei hydroxy- oder aminofunktionalisierten Alkylsulfonsäure(derivate)n oder von mehr als zwei hydroxy- oder aminofunktionalisierten Alkylsulfonsäure(derivate)n B). Besonders gute Ergebnisse werden erzielt, wenn sie ausschließlich auf einer/einem hydroxy- oder aminofunktionalisierten Alkylsulfonsäure(derivat) B) basiert. Somit ist sie bevorzugt die Adduktzusammensetzung von einer/einem hydroxy- oder aminofunktionalisierten Alkylsulfonsäure(derivat) B). Entsprechend leitet sich die Adduktzusammensetzung bevorzugt strukturell von dieser/diesem einen hydroxy- oder aminofunktionalisierten Alkylsulfonsäure(derivat) B) ab.

Ganz besonders bevorzugt ist die/das eine hydroxy- oder aminofunktionalisierte Alkylsulfonsäure-(derivat) das Natriumsalz der Hydroxyethylsulfonsäure.

Gegenstand der vorliegenden Erfindung ist auch ein Verfahren zur Herstellung der erfindungsgemäßen Adduktzusammensetzung, bei dem mindestens ein Diisocyanat A) und mindestens eine hydroxy- oder aminofunktionalisierte Alkylsulfonsäure B) und/oder mindestens ein hydroxy- oder aminofunktionalisiertes Alkylsulfonsäurederivat B) in Gegenwart eines Lösemittels umgesetzt wird.

Bei dem Verfahren wird mindestens ein Diisocyanat A) (und mindestens eine funktionalisierte Alkylsulfonsäure und/oder mindestens ein funktionalisiertes Alkylsulfonsäurederivat B)) eingesetzt. D. h. es wird/werden mindestens ein Diisocyanat, zwei Diisocyanate oder mehr als zwei Diisocyanate eingesetzt. Besonders gute Ergebnisse werden erzielt, wenn ausschließlich ein Diisocyanat eingesetzt wird. Somit wird bevorzugt ein Diisocyanat mit mindestens einer hydroxy- oder aminofunktionalisierten Alkylsulfonsäure und/oder mindestens einem hydroxy- oder aminofunktionalisierten Alkylsulfonsäurederivat umgesetzt.

Diisocyanate A) sind dem Fachmann bekannt. Bevorzugt ist das mindestens eine Diisocyanat ausgewählt aus der Gruppe bestehend aus Cyclohexandiisocyanat, Methylcyclohexandiisocyanat, Ethylcyclohexandiisocyanat, Propylcyclohexandiisocyanat, Methyl-diethyl-cyclohexandiisocyanat, Propandiisocyanaten (insbesondere n-Propandiisocyanat), Butandiisocyanaten (insbesondere n-Butandiisocyanat), Pentandiisocyanaten (insbesondere n-Pentandiisocyanat), Hexandiisocyanaten (insbesondere Hexamethylendiisocyanat (HDI) und 1,5-Diisocyanato-2-methylpentan (MPDI)), Heptandiisocyanaten (insbesondere n-Heptandiisocyanat), Octandiisocyanaten (insbesondere n-Octandiisocyanat), Nonandiisocyanaten (insbesondere 1,6-Diisocyanato-2,4,4-trimethylhexan und 1,6-Diisocyanato-2,2,4-trimethylhexan (TMDI)), Dekandiisocyanaten (insbesondere n-Dekandiisocyanat), Undekandiisocyanaten (insbesondere n-Undekandiisocyanat), Dodekandiisocyanaten (insbesondere n-Dodekandiisocyanat), Isophorondiisocyanat (IPDI), Isocyanatomethylmethylcyclohexylisocyanaten, 2,5(2,6)-Bis(isocyanatomethyl)bicyclo[2.2.1]heptan (NBDI), 1,3-Bis(isocyanatomethyl)cyclohexan (1,3-H$_6$-XDI), 1,4-Bis(isocyanatomethyl)cyclohexan (1,4-H$_6$-XDI), Tetramethylxylylen-diisocyanat (TMXDI), Lysindiisocyanatalkylester und Dicyclohexylmethylendiisocyanat (H12MDI).

Weiter bevorzugt wird das mindestens eine Diisocyanat A) ausgewählt aus der Gruppe bestehend aus Isophorondiisocyanat, Dicyclohexylmethylendiisocyanat, Hexamethylendiisocyanat und Trimethylhexamethylendiisocyanat (insbesondere 2,4,4- Trimethylhexamethylendiisocyanat, 2,2,4-Trimethylhexamethylendiisocyanat, sowie ein Gemisch dieser beiden Isomere).

Ganz besonders bevorzugt ist das Diisocyanat A) Isophorondiisocyanat.

Bei dem erfindungsgemäßen Verfahren wird weiterhin mindestens eine hydroxy- oder aminofunktionalisierte Alkylsulfonsäure B) und/oder mindestens ein hydroxy- oder aminofunktionalisiertes Alkylsulfonsäurederivat B) eingesetzt. Unter den Alkylsulfonsäuren und Alkylsulfonsäurederivaten sind dabei sowohl Hydroxyalkylsulfonsäuren, Aminoalkylsulfonsäuren als auch Hydroxyalkylsulfonsäuresalze und Aminoalkylsulfonsäuresalze zu verstehen.

Entsprechend wird bei dem erfindungsgemäßen Verfahren i) mindestens eine Hydroxyalkylsulfonsäure, ii) mindestens eine Aminoalkylsulfonsäure, iii) mindestens ein Hydroxyalkylsulfonsäuresalz, iv) mindestens ein Aminoalkylsulfonsäuresalz oder v) Mischungen von mindestens zwei Verbindungen ausgewählt aus i) bis iv) eingesetzt. Bevorzugt wird mindestens eine Hydroxyalkylsulfonsäure und/oder mindestens ein Hydroxyalkylsulfonsäuresalz eingesetzt. Besonders bevorzugt wird mindestens ein Hydroxyalkylsulfonsäuresalz eingesetzt.

Bevorzugt wird die mindestens eine hydroxy- oder aminofunktionalisierte Alkylsulfonsäure B) und/oder das mindestens eine hydroxy- oder aminofunktionalisierte Alkylsulfonsäurederivat B) ausgewählt aus der Gruppe bestehend aus Hydroxyethylsulfonsäure, Hydroxypropylsulfonsäure, Hydroxybutylsulfonsäure, Aminoethylsulfonsäure, Aminopropylsulfonsäure, Aminobutylsulfonsäure und 2-[(2-Aminoethyl)aminoethan]sulfonsäure und den entsprechenden Lithium-, Natrium-, Kalium- und Cäsiumsalzen dieser Säuren. Noch weiter bevorzugt wird B) ausgewählt aus der Gruppe der entsprechenden Lithium-, Natrium-, Kalium- und Cäsiumsalze der genannten Säuren.

Bei dem erfindungsgemäßen Verfahren wird mindestens eine hydroxy- oder aminofunktionalisierte Alkylsulfonsäure B) und/oder mindestens ein hydroxy- oder aminofunktionalisiertes Alkylsulfonsäurederivat B) eingesetzt, d. h. es wird eine hydroxy- oder aminofunktionalisierte Alkylsulfonsäure, zwei hydroxy- oder aminofunktionalisierte Alkylsulfonsäuren, mehr als zwei hydroxy- oder aminofunktionalisierte Alkylsulfonsäuren B), ein hydroxy- oder aminofunktionalisiertes Alkylsulfonsäurederivat, zwei hydroxy- oder aminofunktionalisierte Alkylsulfonsäurederivate oder mehr als zwei hydroxy- oder aminofunktionalisierte Alkylsulfonsäurederivate B) eingesetzt. Besonders gute Ergebnisse werden erzielt, wenn ausschließlich eine hydroxy- oder aminofunktionalisierte Alkylsulfonsäure B) oder ausschließlich ein hydroxy- oder aminofunktionalisiertes Alkylsulfonsäurederivat B) eingesetzt wird.

Ganz besonders bevorzugt ist B) das Natriumsalz der Hydroxyethylsulfonsäure.

Ganz besonders bevorzugt wird ein Diisocyanat A) und eine Verbindung B) umgesetzt. Noch weiter bevorzugt wird Isophorondiisocyanat und das Natriumsalz der Hydroxyethylsulfonsäure eingesetzt.

Bevorzugt wird das erfindungsgemäße Verfahren so durchgeführt, dass das mindestens eine Diisocyanat in mindestens einem Lösemittel gelöst und mit der mindestens einen Verbindung B)) versetzt und umgesetzt wird.

Das erfindungsgemäße Verfahren wird in Gegenwart eines Lösemittels durchgeführt. Bevorzugte Lösemittel sind die mit einem Siedepunkt bei einem Druck von 1 bar von kleiner oder gleich 250 °C. Weiter bevorzugt sind entsprechende Ketone (insbesondere Aceton), Amide (insbesondere Dimethylformamid), Lactame (insbesondere N-Methylpyrrolidon), Nitrile (insbesondere Acetonitril), Nitroverbindungen (insbesondere Nitromethan), Harnstoffverbindungen (insbesondere Tetramethylharnstoff), Sulfoxide (insbesondere Dimethylsulfoxid), Sulfone (insbesondere Sulfolan), Lactone (insbesondere gamma-Butyrolacton), Kohlensäureester (insbesondere Dimethylcarbonat) und Ester-Ether (insbesondere Methoxypropylacetat). Diese weiter bevorzugten Lösemittel haben den Vorteil, selbst aprotische organische Lösemittel zu sein, aber polare Stoffe gut zu lösen. Ganz besonders bevorzugt ist das Lösemittel ausgewählt aus der Gruppe bestehend aus Aceton, Dimethylformamid, N-Methylpyrrolidon, Acetonitril, Nitromethan, Tetramethylharnstoff, Dimethylsulfoxid, Sulfolan, gamma-Butyrolacton, Dimethylcarbonat und Methoxypropylacetat.

Das Verhältnis der Summe der NCO-Reste zur Summe der OH- und NH$_2$-Reste der eingesetzten Edukte beträgt bei dem erfindungsgemäßen Verfahren bevorzugt zwischen 1 : 1 und 100 : 1, weiter bevorzugt zwischen 5 : 1 und 20 : 1, noch besonders bevorzugt zwischen 8 : 1 und 12 : 1.

Dem Fachmann ist klar, welche Reaktionsbedingungen erwählen muss, um zum gewünschten Anteil von mindestens 15 % Alkylsulfonsäure(derivat)resten gebunden an eine Allophanat- und/oder Biuretgruppe und/oder an eine von einer Allophanat- und/oder Biuretgruppe durch Addition eines Diisocyanats A) abgeleiteten Gruppe zu gelangen.

Das erfindungsgemäße Verfahren kann bei Temperaturen zwischen Raumtemperatur (25 °C) und 180 °C durchgeführt werden. Die Umsetzung erfolgt bevorzugt innerhalb von Reaktionszeiten zwischen 1 min und 24 h, wobei die Reaktion erst dann abgebrochen wird, wenn das Produkt die gewünschte NCO-Zahl aufweist.

So kann im Falle des Einsatzes von Isophorondiisocyanat als Diisocyanat A) die Umsetzung bei 1 bar bevorzugt innerhalb von 1 h oder mehr bei Reaktionstemperaturen von 140 °C erfolgen. Ebenfalls bevorzugt kann die Umsetzung innerhalb von 4 h oder mehr bei 120 °C erfolgen.

Bevorzugt werden weiterhin die für die Umsetzung in der Polyurethanchemie üblichen Katalysatoren eingesetzt, insbesondere tertiäre Amine und Lewissäuren mindestens eines Übergangsmetalls. Ganz besonders bevorzugt ist der eingesetzte Katalysator Dibutylzinndilaurat oder Zinkoctoat.

Nach Abschluss der Reaktion wird die Mischung abgekühlt. Bevorzugt wird im Anschluss überschüssiges Sulfonsäuresalz abfiltriert.

Nach Abschluss der Reaktion wird das Lösemittel bevorzugt abgetrennt. Weiter bevorzugt erfolgt dies destillativ. Bevorzugt erfolgt die Abtrennung durch Verwendung einer Destillationskolonne, eines Kurzwegverdampfers oder eines Dünnschichtdestillationsapparats.

Gegenstand der vorliegenden Erfindung ist auch die mit dem erfindungsgemäßen Verfahren herstellbare Adduktzusammensetzung.

Die erfindungsgemäßen Adduktzusammensetzungen eignen sich bevorzugt für die Herstellung wässriger Polyurethandispersionen. Insbesondere eignen sich die erfindungsgemäßen Adduktzusammensetzungen für die Verwendung als Hydrophilierungsmittel und als hydrophile Isocyanate. Ganz besonders geeignet sind die erfindungsgemäßen Adduktzusammensetzungen für die Verwendung als Hydrophilierungsmittel.

**Beispiele:**

### a) Herstellung des Hydrophilierungsmittels A (nicht erfindungsgemäß)

73,5 g IPDI wurden in 84 ml DMF gelöst und mit 10 g Hydroxyethylsulfonsäure-Natriumsalz (98%ig) versetzt. Diese trübe Mischung wurde 1 h bei 120 °C gerührt, dann filtriert und schließlich am Rotationverdampfer bei 70 °C vom Lösemittel befreit. Das resultierende Produkt war klar und hatte eine NCO-Zahl von 28,9 % (Theorie 30,0 %). Dies entspricht einem Allophanatanteil von 3,7 Mol-%.

### b) Herstellung des Hydrophilierungsmittels B (erfindungsgemäß)

73,5 g IPDI wurden in 84 ml DMF gelöst und mit 10 g Hydroxyethylsulfonsäure-Natriumsalz (98%ig) versetzt. Diese trübe Mischung wurde 4 h bei 140 °C gerührt, dann filtriert und schließlich am Rotationverdampfer bei 70 °C vom Lösemittel befreit. Das resultierende Produkt war klar und hatte eine NCO-Zahl von 22,0 % (Theorie 30,0 %). Dies entspricht einem Allophanatanteil von 27 Mol-%.

### c) Herstellung der Polyurethandispersion auf Basis A (nicht erfindungsgemäß)

64,4 g Hydrophilierungsmittel A und 31,8 g IPDI wurden in 80 ml Aceton gelöst und dann mit 70,2 g Vestanat T1136 (Polyester, OHZ 102, Evonik), 12,1 g Butandiol (Aldrich), 3,4 g Trimethylolpropan (Aldrich) und 0,1 g Dibutylzinndilaurat versetzt. Nach vier Stunden Heizen und Rühren unter Rückfluß (ca. 63°C) entstand ein Prepolymer mit einer NCO-Zahl von 4,25 %. Von diesem wurden nach Erkalten 234,6 g mit 94 ml Aceton weiter verdünnt und mit einer Mischung aus 5,6 g Ethylendiamin (Aldrich) in 22 ml Aceton versetzt. Nach 15 Sekunden Nachreaktionszeit wurden am Dispermaten bei 4000 U/min innerhalb von 30 s 315 ml kaltes VE-Wasser gegeben und dann zwei Minuten nachdispergiert. Danach wurde bei 60 °C und 50 mbar am Rotationsverdampfer das Aceton abgezogen und durch ein 50 $\mu$m Sieb filtriert. Die weiße Polyurethandispersion (PUD) hatte einen pH-Wert von 8,5, eine mittlere Partikelgröße von 490 nm und einen Festkörpergehalt von 41,5%. Diese PUD zeigte nach 8 Wochen Lagerung bei 50°C weiße Ausfällungen, die sich nicht wieder einrühren ließen. Damit war diese PUD nicht lagerstabil.

### d) Herstellung der Polyurethandispersion auf Basis B (erfindungsgemäß)

64,4 g Hydrophilierungsmittel B und 31,8 g IPDI wurden in 80 ml Aceton gelöst und dann mit 70,2 g Vestanat T1136 (Polyester, OHZ 102, Evonik), 12,1 g Butandiol (Aldrich), 3,4 g Trimethylolpropan (Aldrich) und 0,1 g Dibutylzinndilaurat versetzt. Nach vier Stunden Heizen und Rühren unter Rückfluß (ca. 63°C) entstand ein Prepolymer mit einer NCO-Zahl von 2,95 %. Von diesem wurden nach Erkalten 218,4 g mit 87 ml Aceton weiter verdünnt und mit einer Mischung aus 2,6 g Ethylendiamin (Aldrich) in 10 ml Aceton versetzt. Nach 15 Sekunden Nachreaktionszeit wurden am Dispermaten bei 4000 U/min und innerhalb von 30 s 290 ml kaltes VE-Wasser gegeben und dann zwei Minuten nachdispergiert. Danach wurde bei 60 °C und 50 mbar am Rotationsverdampfer das Aceton abgezogen und durch ein 50 $\mu$m Sieb filtriert. Die weiße Polyurethandispersion (PUD) hatte einen pH-Wert von 9,0, eine mittlere Partikelgröße von 90 nm und einen Festkörpergehalt von 42 %. Diese PUD zeigte nach 8 Wochen Lagerung bei 50 °C keine Ausfällungen.

Damit war diese PUD lagerstabil.

**Patentansprüche**

1. Adduktzusammensetzung

   - mindestens eines Diisocyanats A) und
   - mindestens eines hydroxy- oder aminofunktionalisierten Alkylsulfonsäure(derivat)s B),

   **dadurch gekennzeichnet, dass** in der Adduktzusammensetzung mindestens 15 % der vom Alkylsulfonsäure(derivat) B) abgeleiteten Alkylsulfonsäure(derivat)reste gebunden an eine Allophanat- und/oder Biuretgruppe und/oder an eine von einer Allophanat- und/oder Biuretgruppe durch Addition von Diisocyanat A) abgeleiteten Gruppe vorliegen.

2. Adduktzusammensetzung nach Anspruch 1,
   **dadurch gekennzeichnet, dass**
   das mindestens eine Diisocyanat A) ausgewählt wird aus der Gruppe bestehend aus Cyclohexandiisocyanat, Methylcyclohexandiisocyanat, Ethylcyclohexandiisocyanat, Propylcyclohexandiisocyanat, Methyl-diethyl-cyclohexandiisocyanat, Propandiisocyanaten, Butandiisocyanaten, Pentandiisocyanaten, Hexandiisocyanaten, Heptandiisocyanaten, Octandiisocyanaten, Nonandiisocyanaten, Dekandiisocyanaten, Undekandiisocyanaten, Dodekandiisocyanaten, Isophorondiisocyanat, Isocyanatomethylmethylcyclohexylisocyanaten, 2,5(2,6)-Bis(isocyanatomethyl)bicyclo[2.2.1]heptan, 1,3-Bis(isocyanatomethyl)cyclohexan, 1,4-Bis(isocyanatomethyl)cyclohexan, Tetramethylxylyendiisocyanat, Lysindiisocyanatalkylester und Dicyclohexylmethylendiisocyanat.

3. Adduktzusammensetzung nach Anspruch 2,
   **dadurch gekennzeichnet, dass**
   das mindestens eine Diiscocyanat A) ausgewählt wird aus der Gruppe bestehend aus Isophorondiisocyanat, Dicyclohexylmethylendiisocyanat, Hexamethylendiisocyanat und Trimethylhexamethylendiisocyanat.

4. Adduktzusammensetzung nach einem der vorhergehenden Ansprüche,
   **dadurch gekennzeichnet, dass**
   sie die Adduktzusammensetzung eines Diisocyanats a) ist.

5. Adduktzusammensetzung nach einem der vorhergehenden Ansprüche,
   **dadurch gekennzeichnet, dass**
   das mindestens eine hydroxy- oder aminofunktionalisierte Alkylsulfonsäure(derivat) B) ausgewählt wird aus der Gruppe bestehend aus Hydroxyethylsulfonsäure, Hydroxypropylsulfonsäure, Hydroxybutylsulfonsäure, Aminoethylsulfonsäure, Aminopropylsulfonsäure, Aminobutylsulfonsäure und 2-[(2-Aminoethyl)aminoethan]sulfonsäure und den entsprechenden Lithium-, Natrium-, Kalium- und Cäsiumsalzen dieser Säuren.

6. Adduktzusammensetzung

   nach einem der vorhergehenden Ansprüche,
   **dadurch gekennzeichnet, dass**
   sie die Adduktzusammensetzung eines hydroxy- oder aminofunktionalisierten Alkylsulfonsäure(derivat)s ist.

7. Verfahren zur Herstellung einer Adduktzusammensetzung nach einem der vorhergehenden Ansprüche,
   **dadurch gekennzeichnet, dass**
   mindestens ein Diisocyanat A) und mindestens eine hydroxy- oder aminofunktionalisierte Alkylsulfonsäure B) und/oder mindestens ein hydroxy- oder aminofunktionalisiertes Alkylsulfonsäurederivat B) in Gegenwart eines Lösemittels umgesetzt wird.

8. Verfahren nach Anspruch 7,
   **dadurch gekennzeichnet, dass**
   das Lösemittel ausgewählt wird aus der Gruppe bestehend aus Ketonen, Amiden, Lactamen, Nitrilen, Nitroverbindungen, Harnstoffverbindungen, Sulfoxiden, Sulfonen, Lactonen, Kohlensäureestern und Ester-Ethern.

9. Verfahren nach einem der Ansprüche 7 oder 8,
**dadurch gekennzeichnet, dass**
das Verhältnis der Summe der NCO-Reste zur Summe der OH- und $NH_2$-Reste der eingesetzten Edukte zwischen 1 : 1 und 100 : 1 beträgt.

10. Verfahren nach einem der Ansprüche 7 bis 9,
**dadurch gekennzeichnet, dass**
die Umsetzung in Gegenwart eines tertiären Amins oder einer Lewissäure mindestens eines Übergangsmetalls erfolgt.

11. Verwendung einer Adduktzusammensetzung nach einem der Ansprüche 1 - 6 für die Herstellung wässriger Polyurethandispersionen.

12. Verwendung einer Adduktzusammensetzung nach einem der Ansprüche 1 - 6 als Hydrophilierungsmittel oder als hydrophiles Isocyanat.


**Claims**

1. Adduct composition of

   - at least one diisocyanate A) and
   - at least one hydroxy- or amino-functionalized alkylsulfonic acid (derivative) B),

   **characterized in that** the adduct composition comprises at least 15% of the alkylsulfonic acid (derivative) radicals, derived from the alkylsulfonic acid (derivative) B), bonded to an allophanate and/or biuret group and/or to a group derived from an allophanate and/or biuret group by addition of diisocyanate A).

2. Adduct composition according to Claim 1,
   **characterized in that**
   the at least one diisocyanate A) is selected from the group consisting of cyclohexane diisocyanate, methylcyclohexane diisocyanate, ethylcyclohexane diisocyanate, propylcyclohexane diisocyanate, methyldiethylcyclohexane diisocyanate, propane diisocyanates, butane diisocyanates, pentane diisocyanates, hexane diisocyanates, heptane diisocyanates, octane diisocyanates, nonane diisocyanates, decane diisocyanates, undecane diisocyanates, dodecane diisocyanates, isophorone diisocyanate, isocyanatomethylmethylcyclohexyl isocyanates, 2,5(2,6)-bis(isocyanatomethyl)bicyclo[2.2.1]heptane, 1,3-bis(isocyanatomethyl)cyclohexane, 1,4-bis(isocyanatomethyl)cyclohexane, tetramethylxylyene diisocyanate, lysine diisocyanate alkyl ester and dicyclohexylmethylene diisocyanate.

3. Adduct composition according to Claim 2,
   **characterized in that**
   the at least one diisocyanate A) is selected from the group consisting of isophorone diisocyanate, dicyclohexylmethylene diisocyanate, hexamethylene diisocyanate and trimethylhexamethylene diisocyanate.

4. Adduct composition according to any of the preceding claims,
   **characterized in that**
   it is the adduct composition of a diisocyanate a).

5. Adduct composition according to any of the preceding claims,
   **characterized in that**
   the at least one hydroxy- or amino-functionalized alkylsulfonic acid (derivative) B) is selected from the group consisting of hydroxyethylsulfonic acid, hydroxypropylsulfonic acid, hydroxybutylsulfonic acid, aminoethylsulfonic acid, aminopropylsulfonic acid, aminobutylsulfonic acid and 2-[(2-aminoethyl)aminoethane]sulfonic acid and the corresponding lithium, sodium, potassium and caesium salts of these acids.

6. Adduct composition

   according to any of the preceding claims,
   **characterized in that**

it is the adduct composition of a hydroxy- or amino-functionalized alkylsulfonic acid (derivative).

7. Process for preparing an adduct composition according to any of the preceding claims, **characterized in that** at least one diisocyanate A) and at least one hydroxy- or amino-functionalized alkylsulfonic acid B) and/or at least one hydroxy- or amino-functionalized alkylsulfonic acid derivative B) are reacted in the presence of a solvent.

8. Process according to Claim 7, **characterized in that** the solvent is selected from the group consisting of ketones, amides, lactams, nitriles, nitro compounds, urea compounds, sulfoxides, sulfones, lactones, carbonic esters and ester ethers.

9. Process according to either of Claims 7 and 8, **characterized in that** the ratio of the sum total of the NCO radicals to the sum total of the OH and $NH_2$ radicals of the reactants used is between 1:1 and 100:1.

10. Process according to any of Claims 7 to 9, **characterized in that** the reaction is performed in the presence of a tertiary amine or a Lewis acid of at least one transition metal.

11. Use of an adduct composition according to any of Claims 1-6 for the production of aqueous polyurethane dispersions.

12. Use of an adduct composition according to any of Claims 1-6 as a hydrophilizing agent or as a hydrophilic isocyanate.

**Revendications**

1. Composition d'adduit

   - d'au moins un diisocyanate A) et
   - d'au moins un (dérivé d')acide alkylsulfonique à fonctionnalité hydroxy ou amino B),

   **caractérisée en ce que**, dans la composition d'adduit, au moins 15 % des résidus (du dérivé) de l'acide alkylsulfonique dérivés (du dérivé) de l'acide alkylsulfonique B) sont présents liés à un groupe allophanate et/ou biuret et/ou à un groupe dérivé d'un groupe allophanate et/ou biuret par addition du diisocyanate A).

2. Composition d'adduit selon la revendication 1, **caractérisée en ce que** l'au moins un diisocyanate A) est choisi dans le groupe consistant en le diisocyanatocyclohexane, le diisocyanatométhylcyclohexane, le diisocyanatoéthylcyclohexane, le diisocyanatopropylcyclohexane, le diisocyanatométhyl-diéthyl-cyclohexane, les diisocyanatopropanes, les diisocyanatobutanes, les diisocyanatopentanes, les diisocyanatohexanes, les diisocyanatoheptanes, les diisocyanatooctanes, les diisocyanatononanes, les diisocyanatodécanes, les diisocyanatoundécanes, les diisocyanatododécanes, le diisocyanate d'isophorone, les isocyanates d'isocyanatométhylméthylcyclohexyle, le 2,5(2,6)-bis(isocyanatométhyl)bicyclo[2.2.1]heptane, le 1,3-bis(isocyanatométhyl)cyclohexane, le 1,4-bis(isocyanatométhyl)cyclohexane, le diisocyanate de tétraméthylbutylène, les esters alkyliques de la diisocyanatolysine et le diisocyanate de dicyclohexylméthylène.

3. Composition d'adduit selon la revendication 2, **caractérisée en ce que** l'au moins un diisocyanate A) est choisi dans le groupe consistant en le diisocyanate d'isophorone, le diisocyanate de dicyclohexylméthylène, le diisocyanate d'hexaméthylène et le diisocyanate de triméthylhexaméthylène.

4. Composition d'adduit selon l'une des revendications précédentes, **caractérisée en ce qu'**elle est la composition d'adduit d'un diisocyanate a).

5. Composition d'adduit selon l'une des revendications précédentes, **caractérisée en ce que** l'au moins un (dérivé d')acide alkylsulfonique à fonctionnalité hydroxy ou amino B) est choisi dans le groupe consistant en l'acide hydroxyéthylsulfonique, l'acide hydroxypropylsulfonique, l'acide hydroxybutylsulfonique, l'acide aminoéthylsulfonique, l'acide aminopropylsulfonique, l'acide aminobutylsulfonique et l'acide 2-[(2-aminoéthyl)aminoéthane]sulfonique et les sels correspondants de lithium, de sodium, de potassium et de césium de ces acides.

6. Composition d'adduit selon l'une des revendications précédentes, **caractérisée en ce qu'**elle est la composition d'adduit d'un (dérivé d')acide alkylsulfonique à fonctionnalité hydroxy ou amino.

7. Procédé de préparation d'une composition d'adduit selon l'une des revendications précédentes, **caractérisé en ce qu'**on fait réagir en présence d'un solvant au moins un diisocyanate A) et au moins un acide alkylsulfonique à fonctionnalité hydroxy ou amino B) et/ou au moins un dérivé d'acide alkylsulfonique à fonctionnalité hydroxy ou amino B).

8. Procédé selon la revendication 7, **caractérisé en ce que** le solvant est choisi dans le groupe consistant en les cétones, les amides, les lactames, les nitriles, les composés nitrés, les composés uréiques, les sulfoxydes, les sulfones, les lactones, les esters carbonates et les esteréthers.

9. Procédé selon l'une des revendications 7 ou 8, **caractérisé en ce que** le rapport de la somme des résidus NCO à la somme des résidus OH et $NH_2$ des réactifs utilisés est compris entre 1:1 et 100:1.

10. Procédé selon l'une des revendications 7 à 9, **caractérisé en ce que** la réaction a lieu en présence d'une amine tertiaire ou d'un acide de Lewis d'au moins un métal de transition.

11. Utilisation d'une composition d'adduit selon l'une des revendications 1 à 6 pour la fabrication de dispersions aqueuses de polyuréthane.

12. Utilisation d'une composition d'adduit selon l'une des revendications 1 à 6 en tant qu'agent d'hydrophilisation ou en tant qu'isocyanate hydrophile.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 106366291 A

- EP 0703255 A1